# EUROPEAN PATENT SPECIFICATION

(11) **EP 3 792 024 B1**
(45) Date of publication and mention of the grant of the patent: **22.06.2022**
(21) Application number: 20195211.6
(22) Date of filing: 09.09.2020
(51) Int. Cl.: B27D 5/00, G01N 21/00

(54) **CONTROL SYSTEM FOR EDGE BANDING MACHINES**
KONTROLLSYSTEM FÜR KANTENANLEIMMASCHINE
SYSTEME DE CONTROLE POUR MACHINE DE POSE DE BANDE DE CHANT

(30) Priority: 12.09.2019 IT 201900016187
(43) Date of publication of application: 17.03.2021
(73) Proprietor: SCM Group S.p.A., 47921 Rimini (RN) (IT)
(72) Inventor: CIOLLI, Mattia, 47921 RIMINI (RN) (IT)
(74) Representative: Tiburzi, Andrea

(56) References cited:
- JP-A- H0 292 168
- US-A1- 2008 239 301

## Description

The present invention relates to a control system and an edge banding machine according to the preamble of claim 1. Such a control system and edge banding machine are known from US 2008/239301 A1.

Therefore, the present invention lies in the field of machines to control the quality of the panels banding.

The realization of a quality control system for parts machined by edge manding machines is currently a noteworthy problem. In fact, due to various and different limitations, for example of a physical and structural type, these quality control systems, in this technological field, are difficult to implement. The edging process of a wooden chipboard panel is designed to cover the sides of a previously sectioned panel with an ennobling edge, applied by gluing. The edge, applied on the side sectional view of the panel, should be as real as possible to the essence of the main surfaces of the panel or otherwise aesthetically matched to it. The edge banding machine is the machine where the edging process takes place. This process includes several steps, including the application of the glue on the side of the panel to be banded, the application of the band on said side, the dimensioning of the band itself according to the height and the length of said side, and any machining, for example radius machining, at the edges of the band and/or the panel. The aforesaid processes are carried out while the panel being worked is moving between an inlet station and an outlet station of the edge banding machine, along a predetermined direction.

As it is easy to guess, there are several conditions to be respected during this type of machining, aimed at ensuring that the processed panel has optimal characteristics both from a structural point of view (for example with regard to edge sealing), and from an aesthetic point of view. The difficulty of ensuring optimum machining is also due to the fact that the above-mentioned edges can be realized according to various and numerous varieties not only of materials, such as wood, metals, etc. but also that they may comprise several varieties of colors and shapes.

Since the set of possible defects is very wide, it is easy to understand that the visual inspection by an operator alone is not sufficient to guarantee a high level of quality of the output product.

The problem that arises at the base of the present invention is to optimize the inspection, downstream of an edging process, of the vertical edges of the head and the tail of a clipboard wooden material panel, since this gluing point of the edge turns out to be one of the most delicate: in that area, in fact, there are the two sides of the panel, with a different angle, in direct contact.

For this reason, a high level of precision is required, especially in the edge gluing.

Known control systems and edge banding machines provide a vision system, consisting of multiple cameras, which do not specifically analyze the vertical edges of the panel, since they are arranged so as not to have a field of vision suitable to the segment to be analyzed. It is evident that this solution does not guarantee the quality control of the vertical edges of the head and tail of the panel.

Other known control systems provide a vision system, which is based on the use of at least two video cameras, pointed so as to alternatively inspect the vertical edges of the head and tail of the panel itself during the passage of the panel. This quality control system, providing for the use of two cameras, is particularly expensive in terms of cost and space on the machine. Furthermore, with this system, it is difficult to manage the adjustment of the contrast between the two sides of the panel relative to the same edge, during the acquisition of the image by the cameras.

A further known control system provides for the use of a single camera, which, being able to rotate, is configured to alternatively inspect, during the passage of the panel, the vertical edges of the head and tail of the panel itself.

This control system does not guarantee, however, a sufficient precision due to the rotational movement of the camera that should be perfectly synchronized with the high advancement speed of the panel, and because of the possible loss of image definition during said movement.

The relevant prior art also includes the document EP3462164A1, which describes a control system, which provides for the use of a single fixed camera which observes alternatively, during the passage of the panel, the head and tail edge of the panel itself. For both edges, said camera acquires a series of images along a direction diagonal with respect to the advancement direction of the panel. These images thus obtained, must then be combined to obtain a single image. This operation is performed because the camera is arranged normal to the advancement direction of the piece, and has a limited field of vision to inspect the head and tail edges of the panel. A technical problem of this solution is the possibility of obtaining combined images that differ from reality. A further disadvantage of the aforesaid solution is that of having to use a processor with a high computing power, which allows the combination and processing of the images to be performed. A control system for edge banding machines having technical features that are present in the preamble of the attached claim 1, is described, for example, in the patent documents EP2687837B1, EP3462164A1.

In any case, a control system placed downstream of an edge banding machine, which allows the inspection of the vertical edges of a panel made of wood or similar material, with features similar to those that will be described in detail below, is not at present in the market.

Within the scope of the requirements mentioned above, therefore, the main purpose of the present invention is to provide a control system for edge banding machines that allows the inspection of the vertical edges of a panel, increasing the performance of the quality control process, thus identifying a greater number of imperfections.

A further object of the present invention is to provide system control machines for edge banding which allows having control of the processing at the machine output.

Another object of the present invention is to provide a vision system for quality control, which allows managing the regulation of the contrast between the sides adjacent to the same edge.

Furthermore, the purpose of the present invention is to expand and improve the field of vision of the control system, in order to have more precise results with a more "lean" processing of the acquired images, given by the reduced quantity of images that need to be acquired and enough fast to be compatible with the machining speed of the machine.

The object of the invention is to provide a control system for edge banding machines, which can be integrated into edge banding machines even already in use, and which could also integrate in any other control systems for edge banding machines.

A further object of the invention is to obtain a control system for edge banding machines, which is compact and economical to produce compared to the advantages achieved.

It is therefore object of the present invention a control system for an edge banding machine, suitable to apply a band to a panel advancing along a sliding direction, in correspondence of a vertical edge, comprising a video camera with a viewing cone provided with a bisector and a first mirror for reflecting an image of the vertical edge of the panel.

Preferably, according to the invention, said control system also comprises a second mirror located inside the viewing cone of the video camera and tilted with respect to said bisector at a first angle.

Equally preferably, the first mirror is in a decentralized position with respect to said bisector and tilted in respect to said sliding direction of said panel at a second angle.

Furthermore, according to the invention, the first and second mirror are adjusted in such a way that said video camera captures the image of said vertical edge of said panel through a first reflection on said first mirror and a second reflection on the second mirror.

In particular, the second mirror can be placed along the bisector.

Still, according to the invention, the first angle and/or the second angle may be 0-90 degrees.

The first angle is preferably equal to 80 degrees.

The second angle is preferably equal to 50 degrees.

These angles allow having an optimal result of the reflection of the light beam and of the image acquisition.

In detail, considering an advancement direction of the panel from left to the right, if the first decentralized mirror is located on the left side of the video camera, the acquired image is relative to the vertical edge of the head of the panel, instead, if it is located on the right side of the video camera, the acquired image is relative to the vertical edge of the tail of the panel at issue.

The control system, object of the invention, may comprise a first illuminator, externally adjacent to the first mirror with respect to the bisector, in order to illuminate said vertical edge of said panel.

Preferably, in this case, the first illuminator has the same inclination as said first mirror to illuminate the vertical edge of the panel.

The system can also be arranged to comprise a second illuminator, arranged symmetrically to the first illuminator with respect to the bisector described above.

This increases the visibility of any defects along the vertical edges of the panel to be checked.

Preferably, the system can comprise a third and a fourth mirror, which allow having an image relative to a second vertical edge of the panel at issue.

Preferably, the third and fourth mirrors can be arranged symmetrically to the second and first mirrors, with respect to the bisector.

In detail, the second and the third mirror may be adjacent in correspondence with a point in axis with the bisector but inclined to each other of a third angle, preferably of 160 degrees.

The presence of four mirrors, and of their possible angles, given from the second and third angle, allows detecting, advantageously, the images relating to both vertical edges, both head as well as tail of the panel, with a single device.

The position and angle of the mirrors and/or of the lights can be adjusted through the first adjustment elements.

This advantageously allows defining, on the basis of the features of the machine, the optimal visibility of the vertical edges.

The video camera of the control system can also be provided with second adjustment means, adapted to adjust the distance and the angle of the same video camera with respect to the vertical edge of the panel. This can guarantee a more precise acquisition of the detail relating to the vertical edge of the panel.

To direct more precisely the visual cone towards the first mirror and the second mirror of the video camera, in the direction of the mirrors, there is a gap or opening in front of the same.

These and other purposes are achieved by a control system for edge banding machines according to the invention, as will become clearer in the following of the present description of a preferred embodiment, but not exclusive by way of indication and not limitation in the accompanying drawings, in which:
- figure 1 schematically shows a perspective view of the edge banding machine;
- figure 2 shows schematically a top view of a first embodiment of the two mirrors control system for the edge banding machine, according to the invention;
- figure 3 shows schematically a top view of a second embodiment of the four mirrors control system of the edge banding machine, according to the invention;
- figure 4 relates to the control system for edge banding machine of figure 3, in a perspective view;
- figure 5 relates to a side view of the control system for the edge banding machine of figure 3;
- figure 6 i relates to a horizontal section of the control system for the edge banding machine of figure 3;
- figure 7 relates to a sectional perspective view of the control system for the edge banding machine of figure 6;
- figure 8 schematically shows the control step of the head edge of the panel, for example, made of wooden material, for example in relation to the system of figure 3;
- figure 9 schematically shows the control step of the tail edge of the panel, for example, made of wooden material, for example in relation to the system of figure 3.

With reference to the mentioned figures, the control system 15 for edge banding machines 1 object of the present invention comprises a system having a video camera 4 (with its optics) and at least two mirrors 10, for reflecting the desired image, in this case, the head and tail edges of the panel 11, towards the camera 4 belonging to the aforementioned system 15.

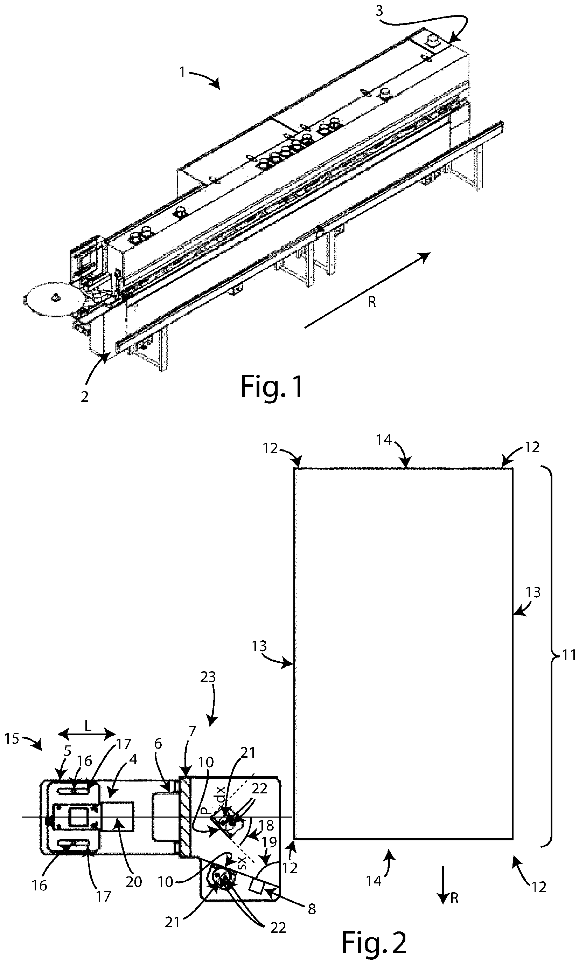

The control system 15 for edge banding machines 1 is preferably positioned (fig. 1) within an empty compartment 3 downstream an edge banding machine 1, along which the panel 11 (figures 2-6, 8-9) to be banded, made of different materials, for example, chipboard wood, slides according to the longitudinal direction R in figures 1-9, through a support roller conveyor 2.

The illustrated panel 11 has (figure 2) two side surfaces 13 parallel and opposite to each other, which correspond to the longer sides of the panel 11 itself; perpendicular to the side surfaces 13 and parallel and opposite to each other, there are two side surfaces 14, which correspond to the shorter sides of a panel.

The adjacency points between the side surfaces 13 and side surfaces 14, respectively, form the so-called vertical edge 12, which is the point of interest of the panel 11, when analyzed by the control system discussed herein.

In particular, according to a first embodiment of the present invention, visible in figure 2, the control system 15 for edge banding machines 1 comprises a camera 4, positioned on a camera support 5, which has, laterally and parallel to the sides of the camera 4 itself, pushing grains 16 within slots 17, which allow adjusting the camera 4 with respect to the distance and with respect to the panel 11 to be analyzed, according to a longitudinal direction L in the figure.

In front of the lens of the camera 4 there is a passage or opening 6, for example of a circular shape, which allows limiting the field of vision of the camera 4 to a certain number of mirrors. At the rear of the passage or opening 6 and in front of the mirror group 23, there is a hardware support 7.

Then, adjacent to the hardware support 7, in the opposite position with respect to the passage or opening 6, there is a mirrors group 23 which, in this first embodiment comprises two mirrors 10, a first mirror placed in an off-center position with respect to the bisector 20 of the cone of vision of the camera 4, inclined with respect to the advancement direction R of the panel 11 by an angle 19, for example of 50 degrees. The second mirror 10 is placed centrally along the trajectory of the bisector 20 of the viewing cone of the camera 4, inclined with respect to the same by an angle 18, for example by 80 degrees.

These angles 18 and 19 of the mirrors 10 enable the camera 4, to detect, in a precise and timed way, one of the two head or tail vertical edges 12. This depends on the decentralized position of the mirror 10, and the angle of inclination of the central mirror 10, with respect to the bisector. If said decentralized mirror is located on the left side sx with respect to the camera 4 and its optics, it will hit the edge of the panel 12 of head 11; if it is located on the right side dx with respect to the camera 4 and to its optics, it will hit and detect the edge 12 of tail 11 of the panel.

With the same inclination of the decentralized mirror 10 and externally close to the same mirror, there is also a linear illuminator 8; for example, a LED strip, which points illuminating, in parallel with respect to the decentralized mirror 10, the vertical edge 12 of the panel 11. In a further embodiment, not shown in the figures, the inclination of the linear illuminator 8 can be different with respect to the inclination of the off-center mirror 10.

In particular, the mirrors 10 and the illuminator 8 can have an adjustable angle and can be positioned by means of pins 21 and recessed fixing grains 22, which screw and pass-through holes *ad hoc* created in a cover 25 of the mirrors group 23.

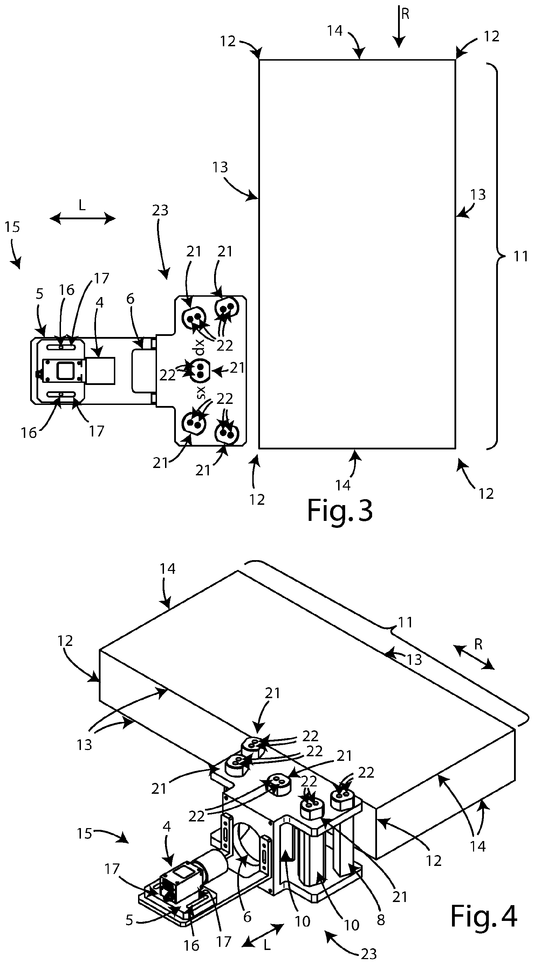

In an additional embodiment shown in detail in figures 3 and 4, the system has four mirrors 10, two adjacent mirrors 10 in correspondence with a point and inclined to each other of an angle 26 between the two, for example of 160 degrees; these mirrors 10 are preferably placed centrally with respect to the viewing cone of the camera 4, and in particular with the point of contact between the two mirrors 10 themselves at the bisector 20 of this viewing cone, when perpendicular to the advancement direction R of the panel.

These mirrors 10 are inclined, for opposite sides (dx and sx references in the figure), with respect to the bisector 20 of the viewing cone of the camera 4 of an angle 18, for example by 80 degrees, the third mirror 10 in an off-center position with respect to the bisector 20 of the viewing cone of the camera 4, inclined with respect to the advancement direction R of the panel 11, by an angle 19, for example of 50 degrees.

In a specular way, the fourth mirror 10 is also in an off-centered position with respect to the bisector 20 of the viewing cone of the camera 4, inclined with respect to the advancement direction R of the panel 11, by an angle 19, for example of 50 degrees.

These angles 18 and 19 of the mirrors 10 allow the camera 4 to detect, in a precise and timed way, both the vertical edges 12, both head and tail ones.

Preferably with the same inclination of the off-centered mirrors 10, and externally close respectively to the same, there are two linear illuminators 8, one for each side: for example, two LED strips, which point and illuminate in parallel with respect to the mirrors 10 on the vertical edge 12 of the panel 11.

Similarly to the variant shown in figure 2, the mirrors 10 and the illuminators 8 can have adjustable angle and position through the pins 21, and recessed fixing grains 22 that screw and pass through the holes created *ad hoc* in a cover 25 of the mirrors group 23.

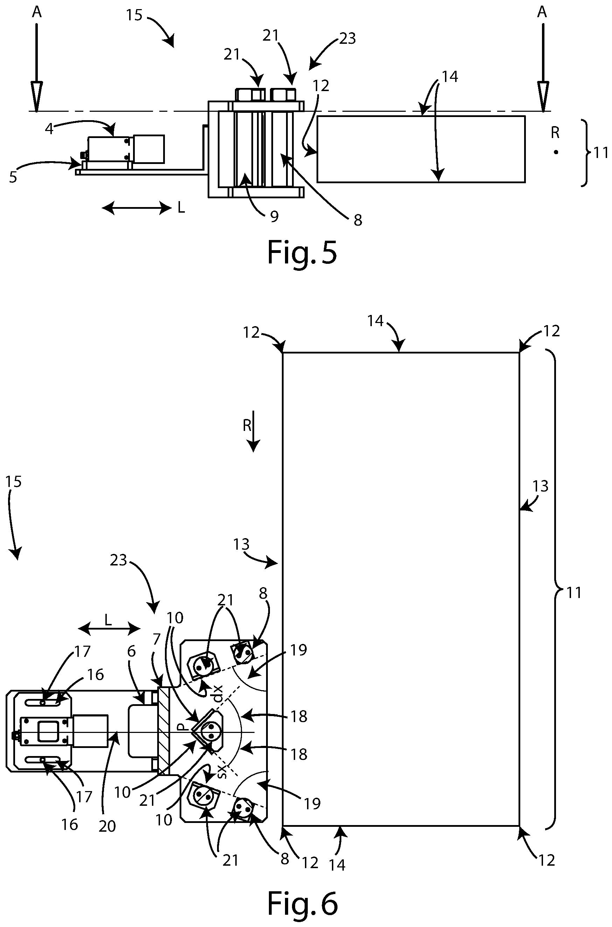

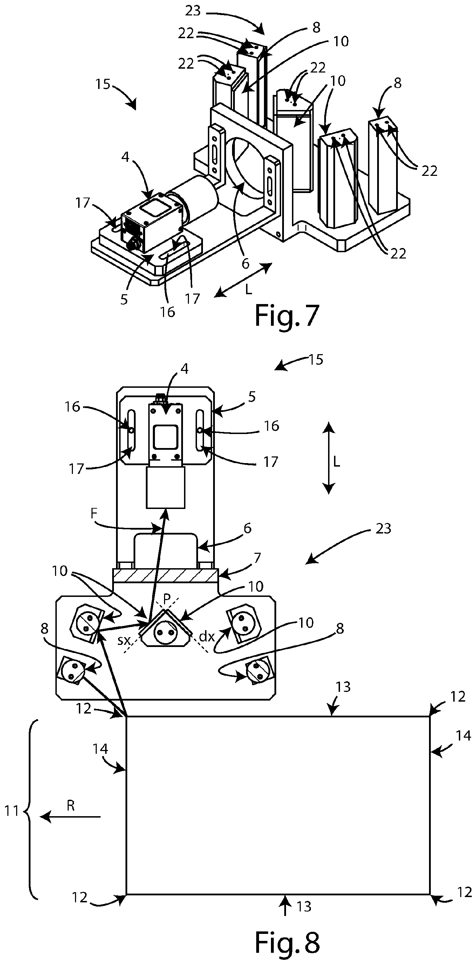

Figure 5 shows a side view of the control system for edge banding machines, in which a section line A is clearly evident, thanks to which it is possible to view in detail in the figures 6 and 7, the system described above without the part relating to the cover 25 and to the pins 21, of the mirrors group 23.

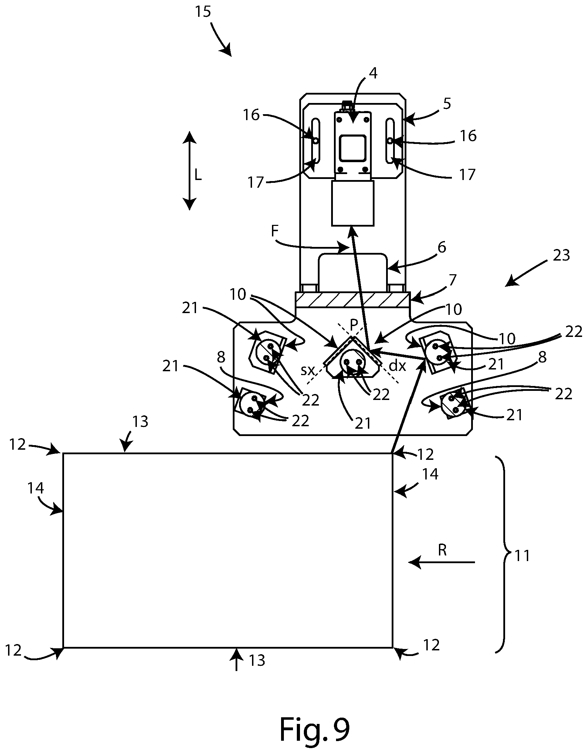

Figures 8 and 9 show two different but consecutive moments of the acquisition step, respectively, of the edge 12 of the head and subsequently of the edge 12 of the tail, according to an advancement direction R in the figure, the panel 11.

In detail, in figure 8, the beam F coming from the illuminator, which illuminates the vertical edge 12 of the head of the panel 11, strikes the off-center mirror 10 adjacent to the left, the beam is thus reflected and in turn strikes the central mirror 10, inclined from the left-hand side in the figure and, passing through the passage or opening 6, in a precise way in terms of the beam width F and of timing, it is acquired by the camera.

In figure 9, the beam F coming from the illuminator, which illuminates the vertical tail edge 12 of the panel 11 strikes the off-center mirror 10 adjacent to the right, the beam is thus reflected and in turn strikes the central mirror 10, inclined from the right side in the figure and, passing through the passage or opening 6, in a precise way in terms of the beam width F and of timing, it is acquired by the camera.

The control system 15 for edge banding machines 1 thus realized, as described above and according to the examples illustrated in detail in the figures 1, 2, 3, 4, 5, 6, 7, 8, and 9 attached, therefore has the following advantages:
- Expand and improve the field of vision of the control system;
- Being able to be integrated into existing edge banding machines and other control systems;
- Save the use of an additional camera thanks to the presence of the mirrors and their strategic position;
- Increase the quality of the output machining of the edge banding machine;
- Possibility of consecutively viewing the head and tail edges of a panel;
- Increase the homogeneity of the illumination;
- More accurately evaluate any local contrast defects and therefore edge imperfections;
- Expand and improve the field of vision of the control system in order to have more and more precise results;
- Having a more "lean" processing of the acquired images, given by the reduced quantity of images that have to be acquired;
- Have a fast-enough system to be compatible with the machining speed of the machine;
- Have a system that allows to optimally manage the adjustment of the contrast between the sides adjacent to the same edge;
- Affect a limited production cost, compared to traditional solutions, in relation to the advantages achieved.

## Claims

1. Control system (15) and an edge banding machine (1) suitable to apply a band to a panel (11) in correspondence with a vertical edge (12), in which said panel (11) advances along the edge banding machine (1) according to a sliding direction (R),
said control system (15) being able to inspect said vertical edge (12) of said advancing panel (11) and comprises a video camera (4) with a viewing cone provided with a bisector (20) and a first mirror (10) for reflecting an image of the vertical edge (12) of the panel (11),
**characterized in that** said control system (15) comprises a second mirror (10) located inside the viewing cone of the video camera (4) and tilted with respect to said bisector (20), at a first angle (18);
and **in that** said first mirror (10) is in a decentralized position with respect to said bisector (20) and tilted in respect with said sliding direction (R) of said panel (11) at a second angle (19), said first and second mirror (10) being adjusted in such a way that, through a first reflection on said first mirror (10) and a second reflection on the second mirror (10), said video camera (4) captures the image of said vertical edge (12) of said panel (11).

2. Control system (15) and an edge banding machine (1) according to claim 1, **characterized in that** said second mirror (10) is placed along said bisector (20).

3. Control system (15) and an edge banding machine (1) according to one of claims 1-2, **characterized in that** said first angle (18) is equal to 0-90 degrees and/or said second angle (19) is equal to 0-90 degrees.

4. Control system (15) and an edge banding machine (1) according to one of claims 1-3, **characterized in** comprising a first illuminator (8), externally adjacent to said first mirror (10) with respect to the bisector (20), in order to illuminate said vertical edge (12) of said panel (11).

5. Control system (15) and an edge banding machine (1) according to claim 4, **characterized in that** said first illuminator (8) has the same inclination as said first mirror (10).

6. Control system (15) and an edge banding machine (1) according to one of claims 1-5, **characterized in that** said control system (15) comprises a third mirror (10) and a fourth mirror (10) for reflecting an image of a second vertical edge (12) of said panel (11).

7. Control system (15) and an edge banding machine (1) as in one of claims 1-6, **characterized in that** said third and fourth mirrors (10) are arranged symmetrically respectively to the second mirror (10) and to the first mirror (10) with respect to the bisector (20).

8. Control system (15) and an edge banding machine (1) as in claim 6 or 7, **characterized in that** it comprises a second illuminator (8) arranged symmetrically to the first illuminator (8) with the respect to the bisector (20).

9. Control system (15) and an edge banding machine (1) according to one of claims 6-7, **characterized in that** the second and the third mirror (10) are adjacent with each other in correspondence of a point (P) along the bisector (20) and inclined to each other at a third angle (26).

10. Control system (15) and an edge banding machine (1) as in claim 9, **characterized in that** the third angle (26) is equal to 160°.

11. Control system (15) and an edge banding machine (1) as in one of claims 1-10, **characterized in that** the position and the angle of at least one of said mirrors (10) and/or said illuminators (8) is adjustable, through first adjusting elements (21, 22).

12. Control system (15) and an edge banding machine as in one of claims 1-11, **characterized in that** said video camera (4) is equipped with second adjusting means (16) for adjusting the distance and the angle of said video camera (4) with respect to said vertical edge (12) of said panel (11).

13. Control system (15) and an edge banding machine (1) as in one of claims 1-12, **characterized in that** a gap or opening (6) is placed in front of the video camera (4) in order to limit the viewing cone of the video camera (4) towards the first mirror (10) and to the second mirror (10).

14. Control system (15) and an edge banding machine (1) as in one of claims 1-13, **characterized in that** said first angle (18) is equal to 80°.

15. Control system (15) and an edge banding machine (1) as in one of claims 1-14, **characterized in that** the second angle (19) is equal to 50°.

## Patentansprüche

1. Steuersystem (15) und eine Kantenanleimmaschine (1), die geeignet ist, ein Band an einer Platte (11) entsprechend einer vertikalen Kante (12) anzubringen, wobei die Platte (11) entlang der Kantenanleimmaschine (1) vorrückt, gemäß einer Gleitrichtung (R), wobei das Steuersystem (15) in der Lage ist, die vertikale Kante (12) der besagten vorrückenden Platte (11) zu inspizieren, und eine Videokamera (4) mit einem Sichtkegel umfasst. Dieser hat eine Teilungslinie (20) und einen ersten Spiegel (10) zum Reflektieren eines Bildes der vertikalen Kante (12) der Platte (11), **dadurch gekennzeichnet, dass** das besagte Steuersystem (15) einen zweiten Spiegel (10) umfasst, der innerhalb des Sichtkegels der Videokamera (4) angeordnet und bezüglich der besagten Teilungslinie (20) um einen ersten Winkel (18) geneigt ist; und **dadurch gekennzeichnet, dass** sich der erste Spiegel (10) in einer dezentralisierten Position in Bezug auf die besagte Teilungslinie (20) befindet und in Bezug auf die besagte Gleitrichtung (R) der besagten Platte (11) in einem zweiten Winkel (19) geneigt ist, wobei der besagte erste und zweiter Spiegel (10) so eingestellt sind, dass die besagte Videokamera (4) durch eine erste Reflexion an dem besagten ersten Spiegel (10) und eine zweite Reflexion an dem zweiten Spiegel (10) das Bild der besagten vertikalen Kante (12) der besagten Platte (11) erfasst.

2. Steuersystem (15) und eine Kantenanleimmaschine (1) nach Anspruch 1, **dadurch gekennzeichnet, dass** der besagte zweite Spiegel (10) entlang der besagten Teilungslinie (20) angebracht ist.

3. Steuersystem (15) und eine Kantenanleimmaschine (1) nach Ansprüchen 1-2, **dadurch gekennzeichnet, dass** der besagte erste Winkel (18) gleich 0-90 Grad ist und/oder der besagte zweite Winkel (19) gleich 0-90 Grad ist.

4. Steuersystem (15) und Kantenanleimmaschine (1) nach einem der Ansprüche 1 bis 3, **dadurch gekennzeichnet, dass** sie eine erste Beleuchtungseinrichtung (8) umfasst, die bezüglich der Teilungslinien (20) außen an den besagten ersten Spiegel (10) angrenzt, um den besagten vertikalen Rand (12) der besagten Platte (11) zu beleuchten.

5. Steuersystem (15) und Kantenanleimmaschine (1) nach Anspruch 4, **dadurch gekennzeichnet, dass** die besagte erste Beleuchtungseinrichtung (8) die gleiche Neigung wie der erste Spiegel (10) hat.

6. Steuersystem (15) und Kantenanleimmaschine (1) nach einem der Ansprüche 1 bis 5, **dadurch gekennzeichnet, dass** das besagte Steuersystem (15) einen dritten Spiegel (10) und einen vierten Spiegel (10) zum Reflektieren eines Bildes einer zweiten vertikalen Kante (12) der Platte (11) umfasst.

7. Steuersystem (15) und eine Kantenanleimmaschine (1) nach einem der Ansprüche 1 bis 6, **dadurch gekennzeichnet, dass** die besagten dritten und vierten Spiegel (10) jeweils symmetrisch zum zweiten Spiegel (10) und zum ersten Spiegel (10) in Bezug auf die Teilungslinie (20) angeordnet sind.

8. Steuersystem (15) und Kantenanleimmaschine (1) nach Anspruch 6 oder 7, **dadurch gekennzeichnet, dass** es eine zweite Beleuchtungseinrichtung (8) umfasst, die symmetrisch zur ersten Beleuchtungseinrichtung (8) in Bezug auf die Teilungslinie (20) angeordnet ist.

9. Steuersystem (15) und Kantenanleimmaschine (1) nach einem der Ansprüche 6 bis 7, **dadurch gekennzeichnet, dass** der zweite und der dritte Spiegel (10) in Übereinstimmung mit einem Punkt (P) entlang der Teilungslinie (20) einander benachbart sind, und in einem dritten Winkel (26) zueinander geneigt.

10. Steuersystem (15) und Kantenanleimmaschine (1) nach Anspruch 9, **dadurch gekennzeichnet, dass** der dritte Winkel (26) gleich 160° ist.

11. Steuersystem (15) und Kantenanleimmaschine (1) nach einem der Ansprüche 1 bis 10, **dadurch gekennzeichnet, dass** die Position und der Winkel von mindestens einem der besagten Spiegel (10) und/oder der besagten Beleuchtungseinrichtung (8) durch erste Einstellelemente (21,22) einstellbar ist.

12. Steuersystem (15) und eine Kantenanleimmaschine nach einem der Ansprüche 1 bis 11, **dadurch gekennzeichnet, dass** die besagte Videokamera (4) mit zweiten Einstellelementen (16) zum Einstellen des Abstands und des Winkels der besagten Videokamera (4) in Bezug auf die besagte vertikale Kante (12) der besagten Platte (11) ausgestattet ist.

13. Steuersystem (15) und Kantenanleimmaschine (1) nach einem der Ansprüche 1-12, **dadurch gekennzeichnet, dass** vor der Videokamera (4) ein Spalt oder eine Öffnung (6) angeordnet ist, um den Sichtkegel der Videokamera (4) zum ersten Spiegel (10) und zum zweiten Spiegel (10) zu begrenzen.

14. Steuersystem (15) und eine Kantenanleimmaschine (1) nach Anspruch 1-13, **dadurch gekennzeichnet, dass** der besagte erste Winkel (18) gleich 80° ist.

15. Steuersystem (15) und eine Kantenanleimmaschine (1) nach einem der Ansprüche 1-14, **dadurch gekennzeichnet, dass** der besagte zweite Winkel (19) gleich 50° ist.

## Revendications

1. Système de contrôle (15) et machine plaqueuse de chants (1) appropriée pour appliquer une bande à un panneau (11) en correspondance avec un bord vertical (12), dans lequel ledit panneau (11) avance le long de la machine plaqueuse de chants (1) selon une direction de glissement (R), ledit système de contrôle (15) étant capable d'inspecter ledit bord vertical (12) dudit panneau qui avance (11) et comprend une caméra vidéo (4) avec un cône de visualisation muni d'une bissectrice (20) et d'un premier miroir (10) pour réfléchir une image du bord vertical (12) du panneau (11), **caractérisé en ce que** ledit système de contrôle (15) comprend un deuxième miroir (10) situé à l'intérieur du cône de vision de la caméra vidéo (4) et incliné par rapport à ladite bissectrice (20), selon un premier angle (18); et **en ce que** ledit premier miroir (10) est dans une position décentralisée par rapport à ladite bissectrice (20) et incliné par rapport à ladite direction de glissement (R) dudit panneau (11) à un deuxième angle (19), lesdits premier et deuxième miroirs (10) étant ajustés de telle manière que, par une première réflexion sur ledit premier miroir (10) et une deuxième réflexion sur le deuxième miroir (10), ladite caméra vidéo (4) capture l'image dudit bord vertical (12) dudit panneau (11).

2. Système de contrôle (15) et machine plaqueuse de chants (1) selon la revendication 1, **caractérisé en ce que** ledit deuxième miroir (10) est placé le long de ladite bissectrice (20).

3. Système de contrôle (15) et machine plaqueuse de chants (1) selon l'une des revendications 1-2, **caractérisé en ce que** ledit premier angle (18) est égal à 0-90 degrés et/ou ledit deuxième angle (19) est égal à 0-90 degrés.

4. Système de contrôle (15) et machine plaqueuse de chants (1) selon l'une des revendications 1-3, **caractérisé en ce qu'**il comprend un premier dispositif d'éclairage (8), extérieurement adjacent audit premier miroir (10) par rapport à la bissectrice (20), afin d'illuminer ledit bord vertical (12) dudit panneau (11).

5. Système de contrôle (15) et machine plaqueuse de chants (1) selon la revendication 4, **caractérisé en ce que** ledit premier dispositif d'éclairage (8) a la même inclinaison que ledit premier miroir (10).

6. Système de contrôle (15) et machine plaqueuse de chants (1) selon l'une des revendications 1-5, **caractérisé en ce que** ledit système de contrôle (15) comprend un troisième miroir (10) et un quatrième miroir (10) pour réfléchir une image d'un deuxième bord vertical (12) dudit panneau (11).

7. Système de contrôle (15) et machine plaqueuse de chants (1) selon l'une des revendications 1-6, **caractérisé en ce que** lesdits troisième et quatrième miroirs (10) sont disposés symétriquement respectivement au deuxième miroir (10) et au premier miroir (10) par rapport à la bissectrice (20).

8. Système de contrôle (15) et machine plaqueuse de chants (1) selon la revendication 6 ou 7, **caractérisé en ce qu'**il comprend un deuxième dispositif d'éclairage (8) disposé symétriquement au premier dispositif d'éclairage (8) par rapport à la bissectrice (20).

9. Système de contrôle (15) et machine plaqueuse de chants (1) selon l'une des revendications 6-7, **caractérisé en ce que** le deuxième et le troisième miroir (10) sont adjacents l'un à l'autre en correspondance d'un point (P) le long de la bissectrice (20) et inclinés l'un par rapport à l'autre selon un troisième angle (26).

10. Système de contrôle (15) et machine plaqueuse de chants (1) selon la revendication 9, **caractérisé en ce que** le troisième angle (26) est égal à 160°.

11. Système de contrôle (15) et machine plaqueuse de chants (1) selon l'une des revendications 1 à 10, **caractérisés en ce que** la position et l'angle d'au moins l'un desdits miroirs (10) et/ou desdits dispositifs d'éclairage (8) sont réglables, par l'intermédiaire de premiers éléments de réglage (21, 22) .

12. Système de contrôle (15) et machine plaqueuse de chants selon l'une des revendications 1-11, **caractérisé en ce que** ladite caméra vidéo (4) est équipée de deuxièmes moyens de réglage (16) pour régler la distance et l'angle de ladite caméra vidéo (4) par rapport audit bord vertical (12) dudit panneau (11).

13. Système de contrôle (15) et machine plaqueuse de chants (1) selon l'une des revendications 1-12, **caractérisé en ce qu'**un espace ou une ouverture (6) est placé (e) devant la caméra vidéo (4) afin de limiter le cône de vision de la caméra vidéo (4) vers le premier miroir (10) et vers le deuxième miroir (10).

14. Système de contrôle (15) et machine plaqueuse de chants (1) selon l'une des revendications 1-13, **caractérisé en ce que** ledit premier angle (18) est égal à 80°.

15. Système de contrôle (15) et machine plaqueuse de chants (1) selon l'une des revendications 1 à 14, **caractérisé en ce que** le deuxième angle (19) est égal à 50°.
